(19) Europäisches Patentamt
European Patent Office
Office européen des brevets

(11) EP 4 269 132 B1

(12) EUROPEAN PATENT SPECIFICATION

(45) Date of publication and mention of the grant of the patent:
**04.06.2025 Bulletin 2025/23**

(21) Application number: **21914973.9**

(22) Date of filing: **19.10.2021**

(51) International Patent Classification (IPC):
***B60C 9/18*** (2006.01) ***B60C 3/04*** (2006.01)
***B60C 13/00*** (2006.01) ***C08K 7/02*** (2006.01)
***C08L 21/00*** (2006.01) ***B60C 9/00*** (2006.01)
***B60C 9/20*** (2006.01) ***B60C 11/03*** (2006.01)
***C08L 7/00*** (2006.01)

(52) Cooperative Patent Classification (CPC):
(C-Sets available)
**B60C 3/04; B60C 9/0064; B60C 11/033; C08L 7/00;** B60C 2009/2016; B60C 2009/2077; B60C 2009/2083; B60C 2011/0353; B60C 2011/0355; B60C 2011/0358; B60C 2013/006; Y02T 10/86 (Cont.)

(86) International application number:
**PCT/JP2021/038521**

(87) International publication number:
**WO 2022/145112 (07.07.2022 Gazette 2022/27)**

# (54) PNEUMATIC TIRE

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2020 JP 2020218139**

(43) Date of publication of application:
**01.11.2023 Bulletin 2023/44**

(73) Proprietor: **Sumitomo Rubber Industries, Ltd.**
**Kobe-shi, Hyogo 651-0072 (JP)**

(72) Inventors:
- **MISAKI Momoka**
  **Kobe-shi, Hyogo 651-0072 (JP)**
- **DONG Miao**
  **Kobe-shi, Hyogo 651-0072 (JP)**
- **KAWAI Hiroki**
  **Kobe-shi, Hyogo 651-0072 (JP)**

(74) Representative: **TBK**
**Bavariaring 4-6**
**80336 München (DE)**

(56) References cited:
**EP-A2- 1 209 009** **JP-A- 2001 334 809**
**JP-A- 2001 334 809** **JP-A- 2007 015 638**
**JP-A- 2009 113 794** **JP-A- 2010 089 727**
**JP-A- 2010 089 727** **JP-A- 2012 254 668**
**JP-A- 2014 151 755** **JP-A- 2014 151 755**
**JP-A- 2015 080 972** **JP-A- 2015 511 197**
**JP-A- 2015 511 197** **JP-A- 2016 203 685**
**JP-A- 2018 508 405** **JP-A- 2018 535 879**
**JP-A- 2018 535 879** **JP-A- H06 255 313**
**JP-A- H06 255 313** **JP-B1- 6 699 794**
**JP-B1- 6 769 573** **JP-B1- 6 769 573**
**US-A1- 2020 298 623** **US-A1- 2020 307 316**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08L 9/00, C08K 3/04**

## Description

[TECHNICAL FIELD]

The present invention relates to pneumatic tires, and more particularly to pneumatic tires with belt layers.

[BACKGROUND ART]

In recent years, from the viewpoint of increasing interest in environmental issues and economic efficiency, there has been an increasing demand for fuel efficiency in automobiles and for improved fuel efficiency of pneumatic tires (hereinafter, simply referred to as "tires") installed in automobiles as well.
The fuel efficiency of a tire can be evaluated by the rolling resistance, and it is known that the smaller the rolling resistance, the better the fuel efficiency of the tire.
Therefore, conventionally, it has been proposed to reduce the rolling resistance by devising the composition of the rubber composition constituting the tread portion of the tire (for example, Patent Documents 1 to 4).
Patent Documents 5 to 12 disclose pneumatic tires having the features of the preamble of claim 1.

[PRIOR ART DOCUMENT]

[PATENT DOCUMENT]

[Patent Document 1] JP 2018- 178034 A
[Patent Document 2] JP 2019- 089911 A
[Patent Document 3] WO 2018/186367 A1
[Patent Document 4] JP 2019- 206643 A
[Patent Document 5] EP 1 209 009 A2
[Patent Document 6] JP 2016- 203685 A
[Patent Document 7] JP 2015- 080972 A
[Patent Document 8] JP 2010- 089727 A
[Patent Document 9] JP 2015- 511197 A
[Patent Document 10] JP 2001- 334809 A
[Patent Document 11] JP H06- 255313 A
[Patent Document 12] JP 2018- 535879 A

[SUMMARY OF THE INVENTION]

[PROBLEMS TO BE SOLVED BY THE INVENTION]

However, with the development of expressways in recent years, the number of opportunities to travel long distances at high speeds has increased dramatically. Under this circumstance, tires manufactured by the above-mentioned conventional technology cannot be said to have sufficient durability at high-speed running, and further improvement is required.
Accordingly, an object of the present invention is to provide a pneumatic tire with excellent durability during high-speed running.

[MEANS FOR SOLVING THE PROBLEM]

The present inventors have conducted intensive studies on how to solve the above problems, found that the above problems can be solved by the invention described below, and completed the present invention.
The above object is achieved by a pneumatic tire having the features of claim 1. Advantageous further developments are defined in the dependent claims.

[EFFECT OF THE INVENTION]

According to the present invention, it is possible to provide a pneumatic tire with excellent durability during high-speed running.

[EMBODIMENTS FOR CARRYING OUT THE INVENTION]

Features of the tire according to the present invention

First, the features of the tire according to the present invention will be described.

1. Overview

A tire according to the present invention is a pneumatic tire that has a side portion and a belt layer, and the belt layer uses monofilament cords as reinforcing cords. Then, the number of monofilament cords arranged per 5 cm in the tire width direction (hereinafter also referred to as "ends") e (cords/5 cm) in the cross section of the belt layer in the tire radial direction, and the tire cross-sectional width Wt (mm), when the tire is installed on a standardized rim and the internal pressure is set to 250 kPa satisfy e/ (139.5 - 0.3Wt) > 1.14 (formula 1) and e/(191.5 - 0.3Wt) < 0.63 (formula 2).
By having such features, as will be described later, it is possible to provide a tire with excellent durability during high-speed running.
In the above description, the tire cross-sectional width Wt is the linear distance between the sidewalls including all the patterns, characters, etc. on the tire side surface (the total width of the tire) and excluding patterns, characters, etc. on the tire side surface, when the tire is installed on a standardized rim, the internal pressure is set to 250 kPa and no load is applied.
Here, the above mentioned "standardized rim" is a rim defined for each tire in the standard system including the standard on which the tire is based. For example, in the case of the above mentioned JATTA, standard rims in applicable sizes described in "JATTA YEAR BOOK", in the case of ETRTO (The European Tire and Rim Technical Organization), "Measuring Rim" described in "STANDARDS MANUAL", and in the case of TRA (The Tire and Rim Association, Inc.), "Design Rim" described in "YEAR BOOK" mean the "regular rim". In the case of tires that are not specified in the standard, it means a rim having the smallest rim diameter, and then having the narrowest width among the rims which can be assembled and the internal pressure can be maintained, that is, rims not causing air leakage between the rim and the tire.
In addition, the number of monofilament cords arranged per 5 cm in the tire width direction (ends) e (cords/5 cm) can be indicated by measuring the number of monofilament cords in the range of ±2.5 to 5.0 cm with respect to the equatorial plane of the tire cross section and converting the number of cords per 5 cm. The specific array number e (cords/5 cm) is preferably 55 cords/5 cm or more, more preferably 65 cords/5 cm or more, further preferably 68 cords/5 cm or more, further preferably 75 cords/5 cm or more, and further preferably more than 80 cords/5 cm. On the other hand, it is preferably less than 150 cords/5 cm, more preferably 110 cords/5 cm or less, further preferably cords/5 cm or less, and further preferably 85 cords/5 cm or less.
The cord outer diameter d (mm) of the monofilament cord is not particularly limited, but is preferably 0.1 mm or more, and more preferably 0.2 mm or more. On the other hand, it is preferably 0.5 mm or less, more preferably 0.4 mm or less, and 0.3 mm is particularly preferred.
In addition, the "cord outer diameter" in the above description refers to the cord outer diameter in a direction parallel to the tire width direction of the monofilament cord of the belt layer in the tire cross section, and the average value of the cord outer diameters in the direction parallel to the tire width direction of the cords measured when the end e (cords/5 cm) is calculated can be used.

2. Mechanism of Manifestation of Effect in Tires according to the present invention

The mechanism of manifestation of effect according to the present invention, that is, the mechanism by which a pneumatic tire with excellent durability during high-speed running can be provided is presumed as follows.
In order to reduce the rolling resistance, it is conceivable to reduce the weight of the tire, and as a concrete means thereof, it is conceivable to use monofilament cords as the reinforcing cords of the belt layers.
However, since the monofilament cord is not twisted and cannot flex. Therefore, if the monofilament cords are densely arranged in a tire having a wide tread width, the rigidity of the tread ring may become too high. When such a tire climbs over the protrusions at high speed, the side portion is greatly deformed and the tire is damaged, which may lead to deterioration in durability during high-speed running. At the same time, such tires tend to convey unevenness of the road surface, which may lead to deterioration of ride comfort performance.
Therefore, as a countermeasure, it is considered to make the arrangement of the monofilament cords sparse according to the tread width. By sparsely arranging the monofilament cords, the rigidity of the tread ring does not become too high, and the impact is easily absorbed at the tread, so it is thought that the deformation that occurs in the side part is minimized, the occurrence of impact destruction at the side portion during high-speed running can be suppressed, and the durability of the tire can be improved.
On the other hand, however, if the arrangement of the monofilament cords becomes too sparse, the tread is less

constrained by the belt layer, resulting in greater deformation of the tread during high-speed running and there is a risk of occurrence of damage to the tread. Therefore, as the width of the tread increases, the number of monofilament cords arranged is increased to prevent the belt from becoming too sparse, thereby maintaining the binding force of the belt layer and suppressing occurrence of damage to the tread, and it is thought that the durability during high-speed running is improved.

As described above, the present inventors have thought that the tread width, that is, the tire cross-sectional width Wt (mm), and the number of monofilament cords arranged e (cords/5 cm) are parameters related to tire durability during high-speed running, and have conducted experiments and studies on a favorable relationship between the number of monofilament cords arranged e (cords/5 cm) and the tread width, that is, the tire cross-sectional width Wt (mm). As a result, the present inventors have found that, when the above $e/(139.5 - 0.3Wt) > 1.14$ (formula 1) and $e/(191.5 - 0.3Wt) < 0.63$ (formula 2) are satisfied, the durability at high-speed running can be improved; and have completed the present invention.

In this case, as the tire cross-sectional width Wt (tread width) increases, the total number of monofilament cords arranged on the tread surface increases, so it is thought that the ends may be gradually reduced.

In the above description, the specific [e/ (139.5 - 0.3Wt)] is preferably 1.01 or more, more preferably 1.02 or more, further preferably 1.12 or more, further preferably 1.14 or more, further preferably 1.20 or more, further preferably 1.22 or more, further preferably 1.64 or more, and further preferably 1.76 or more. According to the invention, the specific [e/ (139.5 - 0.3Wt)] is more than 1.14.

In addition, the specific [e/ (191.5 - 0.3Wt)] is preferably 0.92 or less, more preferably 0.90 or less, further preferably 0.67 or less, further preferably 0.63 or less, further preferably 0.62 or less, further preferably 0.61 or less, further preferably 0.59 or less, further preferably 0.57 or less, and further preferably 0.52 or less. According to the invention, the specific [e/ (191.5 - 0.3Wt)] is less than 0.63

As a result of further experiments and studies, it was found that the tire cross-sectional width Wt is preferably 125 mm or more and 300 mm or less, and, when the tire cross-sectional width Wt is 215 mm or more, it is more preferred that $e/(110.84 - 0.1667Wt) > 1$ (formula 3) is also satisfied in addition to (formula 1) and (formula 2).

In the above description, the specific tire cross-sectional width Wt is preferably 216 mm or more, more preferably 217 mm or more, further preferably 218 mm or more, further preferably 240 mm or more, further preferably 241 mm or more, further preferably 242 mm or more, further preferably 285 mm or more, further preferably 286 mm or more, and further preferably 287 mm or more.

The specific [e/ (110.84 - 0.1667Wt)] is preferably 1.01, more preferably 1.03 or more, further preferably 1.06 or more, further preferably 1.14 or more, further preferably 1.50 or more, and further preferably 1.56 or more.

[2] More preferable aspect of the tire according to the present invention

The tire according to the present invention can obtain further greater effects by adopting the following aspects.

1. Relationship between complex modulus of sidewall rubber composition and height of side portion

As a result of further experiments and studies, the present inventors have found that the improvement in durability during high-speed running is related to the rigidity of the sidewall rubber composition in addition to the improvement regarding the belt layer described above.

That is, if the rigidity of the sidewall rubber composition is high and the height of the side portion is low, when input is applied to the side portion due to the impact from the tread portion, stress is concentrated on the side portion and impact fracture easily occurs. Moreover, if the sidewall rubber composition has high rigidity, impact applied to the tread portion cannot be absorbed like a cushion, which may lead to damage to the tread portion.

If the side portion is made flexible, by controlling the rigidity of the sidewall rubber composition according to the height of the side portion, stress concentration will not occur even when input is applied to the side portion, and it is thought that, since absorption of the impact becomes possible, the occurrence of damage in the tread portion can also be suppressed. Therefore, the present inventors have conducted experiments and studies regarding the relationship between the complex elastic modulus of the sidewall rubber composition and the height of the side portion.

As a result, it was found that the durability during high-speed running is further improved when the complex elastic modulus E* (MPa) measured under the conditions of temperature of 70°C, initial strain of 5%, dynamic strain of ±1%, frequency of 10 Hz, deformation mode: elongation and the height T (mm) of the side portion satisfy $(E^*/T) \times 100 \leqq 3.0$ (formula 4).

In the above, the complex elastic modulus E* of the sidewall rubber composition can be measured, for example, using a viscoelasticity measuring device such as "Eplexor (registered trademark)" manufactured by GABO. The elastic modulus E* is, for example, preferably 1.5 MPa or more, more preferably 2.0 MPa or more, further preferably 2.5 MPa or more, and further preferably 3.2 MPa or more. On the other hand, it is preferably 6.0 MPa or less, more preferably 5.0 MPa or less, further preferably 4.1 MPa or less, and further preferably 4.0 MPa or less.

The height T of the side portion can be obtained by subtracting the rim diameter R (mm) from dt (mm), where dt (mm) is the outer diameter of the tire installed on a standardized rim and the internal pressure is set to 250 kPa.
The specific height T of the side portion is preferably 100.0 mm or more, more preferably 128.9 mm or more, and further preferably 150.8 mm or more.
In the present invention, the specific $(E^* / T)\times 100$ is preferably 2.72 or less, more preferably 2.50 or less, and further preferably 2.48 or less.

2. Angle of reinforcing cord (monofilament cord)

The angle between the reinforcing cord (monofilament cord) of the belt layer and the straight line parallel to the tire circumferential direction is preferably 10° or more, more preferably 15° or more, further preferably 20° or more, and further preferably 23° or more. On the other hand, it is preferably 35° or less, more preferably 33° or less, and further preferably 30° or less.
By arranging the monofilament cords of the belt layer at such angle, it is possible to obtain a hoop effect, which firmly restrains almost the entire width of the tread portion and suppresses the amount of deformation of the tread portion during rolling. Therefore, the durability during high-speed running can be improved.

3. Multi-layering of belt layers

In the present invention, it is preferred that the belt layer is multilayered by providing at least two layers, and the average distance D (mm ) between belt layers in the tread portion is 0.5 mm or less in at least one set of belt layers adjacent in the tire radial direction. The distance D is more preferably 0.45 mm or less, further preferably 0.4 mm or less, and further preferably 0.22 mm or less.
By arranging one set of belt layers with such an average distance D, each belt layer cooperates with each other to constrain the tread portion, suppress the amount of deformation of the tread portion, and durability can be improved.
The "average distance D between the belt layers" referred to here is the average distance between the monofilament cords of the belt layers, and is equal to the distance between the outer surface of the monofilament cord of the inner belt layer and the inner surface of the monofilament cord of the belt layer on the surface side of the two overlapping belt layers on the equatorial plane.

4. Belt reinforcement layer

In the present invention, when the belt reinforcing layer is provided radially outward of the tire from the belt layer, the deformation of the tread portion is further suppressed, and durability during high-speed running can be further improved, and therefore preferable. In this case, it is preferred that the average distance between the monofilament cords in the belt layer and the cords in the belt reinforcing layer is preferably 0.1 mm or more and 0.5 mm or less.

5. Grooves in the tread

Preferably, the tire according to the present invention has a circumferential groove extending continuously in the tire circumferential direction in the tread portion. It is preferable that the ratio ($L_{80}/L_0$) of the groove width $L_{80}$ at a depth of 80% of the maximum depth of the circumferential groove to the groove width $L_0$ of the circumferential groove on the contact surface of the tread portion is preferably 0.3 or more and 0.7 or less. As a result, the movement of the entire land portion can be suppressed at the bottom surface of the land portion of the tread portion, and the durability during high-speed running can be improved. $L_{80}/L_0$ is more preferably 0.35 or more, and further preferably 0.40 or more. It is more preferably 0.65 or less, and further preferably 0.60 or less.
The above-mentioned $L_0$ and $L_{80}$ refer to the linear distance ($L_0$) between the groove end portions at the tread surface portion and the minimum distance ($L_{80}$) between the groove walls at a groove depth of 80%, respectively, of the tread circumferential groove in a tire installed on a standardized rim, having internal pressure of 250 kPa and in a no-load state. Simply, it is possible to obtain in a state where the bead portion of the section cut out in the tire radial direction with a width of 2 to 4 cm is pressed down according to the corresponding rim width.
Preferably, the tread portion has a plurality of circumferential grooves, and the total cross-sectional area of the plurality of circumferential grooves is 10% or more and 30% or less of the cross-sectional area of the tread portion. As a result, movement of the tread portion can be suppressed, and durability during high-speed running can be improved. It is more preferably 15% or more, and further preferably 18% or more. On the other hand, it is more preferably 27% or less, and further preferably 25% or less.
The cross-sectional area of the circumferential groove described above refers to the total value of the area composed of a straight line connecting the end portions of the circumferential groove of the tread and a groove wall in a tire

installed on a standardized rim, having an internal pressure of 250 kPa and in a no-load state. It can be simply obtained in a state where the bead portion of the section cut out in the tire radial direction with a width of 2 to 4 cm is pressed down according to the rim width

The cross-sectional area of the tread portion refers to the area outside the tire radial direction from the belt layer in the region separated by a straight line connecting the circumferential groove ends of the tread portion and two straight lines parallel to the equatorial plane that pass through both ends of the widest among the tread surface profile formed by the tread surface and belt layer, in the radial cross section of the tire installed on a standardized rim, having an internal pressure of 250 kPa and in no-load state. When the belt reinforcing layer using organic fibers and/or steel cords is provided on the outer side in the radial direction of the tire from the belt layer, it refers to the area on the outer side in the radial direction from the belt reinforcing layer.

Further, it is preferable that the tread portion has a plurality of lateral grooves extending in the tire axial direction, and the total volume of the plurality of lateral grooves is 2.0% or more and 5.0% or less of the volume of the tread portion. This can suppress the movement of the tread portion and durability during high-speed running can be improved. It is more preferably 2.2% or more, further preferably 2.5% or more, and particularly preferably 2.7% or more. On the other hand, it is more preferably 4.0% or less, further preferably 3.5% or less, and particularly preferably 3.0% or less.

The above-mentioned volume of the lateral groove refers to the total volume of the volume composed of the surface connecting the ends of the lateral groove and the groove wall in a tire installed on a standardized rim, having an internal pressure of 250 kPa and in a no-load state. It can be calculated by obtaining the volume of each lateral groove and obtain the total value. Further, the volume of the tread portion can be calculated by calculating the area of the tread portion and multiplying it by the outer diameter, and finding the difference from the volume of the lateral groove.

[3] Embodiment

Hereinafter, the present invention will be specifically described based on embodiments.

A. Belt layer

In the tire according to the present embodiment, the belt layer is produced by coating a rubber composition constituting the belt layer (belt layer rubber composition) on both sides of monofilament cords arranged at predetermined ends, and a belt member is manufactured using the belt layer.

B. Side portion

In the tire according to the present embodiment, the side portion is produced by molding the sidewall rubber composition described below into a predetermined shape.

1. Sidewall rubber composition

(1) Compounding material

The sidewall rubber composition can be obtained from the rubber component and other compounding materials described below.

(a) Rubber component

In the present embodiment, the rubber component is not particularly limited, and rubbers (polymers) commonly used in the manufacture of tires, such as isoprene-based rubber, butadiene rubber (BR), styrene-butadiene rubber (SBR), diene-based rubber such as nitrile rubber (NBR), butyl-based rubber such as butyl rubber, and the like can be used. Among these, it is preferable to include isoprene-based rubber and butadiene-based rubber from the viewpoint of forming a phase-separated structure and less likely to crack during deformation. Note that SBR and other rubber components may be used together as necessary.

(a-1) Isoprene rubber

The content (total content) of the isoprene-based rubber in 100 parts by mass of the rubber component is preferably 40 parts by mass or more, more preferably 50 parts by mass or more, and further preferably 55 parts by mass or more from the viewpoint of manifesting good tensile strength and making it difficult to cause damage such as cracks due to deformation. On the other hand, it is preferably 90 parts by mass or less, more preferably 80 parts by mass or less, and

further preferably 65 parts by mass, from the viewpoint of forming a phase-separated structure with other rubber components and preventing the development of cracks and fractures inside the rubber.

Examples of isoprene-based rubbers include natural rubber (NR), isoprene rubber (IR), reformed NR, modified NR, and modified IR, but NR is preferable from the viewpoint of excellent strength.

As NR, for example, those commonly used in the tire industry, such as SIR20, RSS#3, and TSR20, can be used. The IR is not particularly limited, and for example, those commonly used in the tire industry such as IR2200 can be used. Examples of reformed NR include deproteinized natural rubber (DPNR), and high-purity natural rubber (UPNR). Examples of modified NR include epoxidized natural rubber (ENR), hydrogenated natural rubber (HNR), and grafted natural rubber. Examples of modified IR include epoxidized isoprene rubber, hydrogenated isoprene rubber, and grafted isoprene rubber. These may be used alone or in combination of two or more.

(a-2) BR

In the present embodiment, it is preferable to use BR together with NR as the rubber component. The content of BR is preferably 10 parts by mass or more, more preferably 20 parts by mass or more, and further preferably 35 parts by mass or more, from the viewpoint of suppressing the development of cracks and fractures. On the other hand, it is preferably 60 parts by mass or less, more preferably 50 parts by mass or less, and further preferably 45 parts by mass or less.

The weight average molecular weight of BR is, for example, more than 100,000 and less than 2,000,000. The vinyl bond content (1,2-bonded butadiene unit content) of BR is, for example, more than 1% by mass and less than 30% by mass. The cis content of BR is, for example, more than 1% by mass and 98% by mass or less. The trans content of BR is, for example, more than 1% and less than 60% by mass. The cis content can be measured by infrared absorption spectrometry.

BR is not particularly limited, and BR with high cis content (90% or more of cis content), BR with low cis content, BR containing syndiotactic polybutadiene crystals, and the like can be used. BR may be either unmodified BR or modified BR, and modified BR may be, for example, S-modified BR modified with a compound (modifying agent) represented by the following formula.

[Chemical 1]

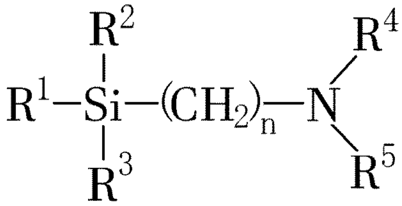

In the formula, $R^1$, $R^2$ and $R^3$ are the same or different and represent an alkyl group, alkoxy group, silyloxy group, acetal group, carboxyl group (-COOH), mercapto group (-SH) or derivatives thereof. $R_4$ and $R_5$ are the same or different and represent a hydrogen atom or an alkyl group. $R_4$ and $R_5$ may combine to form a ring structure with the nitrogen atom. n represents an integer.

Examples of modified BR modified with the compound (modifier) represented by the above formula include BR whose polymer terminal (active terminal) has been modified with the compound represented by the above formula.

$R^1$, $R^2$ and $R^3$ are preferably alkoxy groups (preferably an alkoxy group having 1 to 8 carbon atoms, and more preferably an alkoxy group having 1 to 4 carbon atoms). An alkyl group (preferably an alkyl group having 1 to 3 carbon atoms) is suitable for $R^4$ and $R^5$. n is preferably 1-5, more preferably 2-4, and further preferably 3. Also, when $R^4$ and $R^5$ combine to form a ring structure with a nitrogen atom, it is preferably a 4- to 8-membered ring. The alkoxy group also includes a cycloalkoxy group (cyclohexyloxy group, etc.) and an aryloxy group (phenoxy group, benzyloxy group, etc.).

Specific examples of the modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

As modified BR, modified BR modified with the following compounds (modifying agents) can also be used. Examples of the modifier include polyglycidyl ethers of polyhydric alcohols such as ethyleneglycol diglycidyl ether, glycerin triglycidyl ether, trimethylolethane-triglycidyl ether and trimethylolpropane triglycidyl ether;

polyglycidyl ether of aromatic compound having two or more of phenol group such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4'-diglycidyldiphenylamine and 4,4'-diglycidyldibenzyl-methylamine;
diglycidylamino compounds such as diglycidylaniline, N, N'-diglycidyl-4-glycidyloxyaniline, diglycidylorthotoluidine, tetraglycidylmetaxylene diamine , tetraglycidylaminodiphenylmethane, tetraglycidyl-p-phenylenediamine, diglycidylaminomethylcyclohexane and tetraglycidyl-1,3-bisaminomethyl cyclohexane;
amino group-containing acid chlorides such as bis-(1-methylpropyl) carbamate chloride, 4-morpholincarbonyl chloride, 1-pyrrolidincarbonyl chloride, N, N-dimethylcarbamate chloride and N, N-diethylcarbamate chloride;
epoxy group-containing silane compounds such as 1,3-bis-(glycidyloxypropyl)tetramethyldisiloxane and (3-glycidyloxypropyl) - pentamethyldisiloxane;
sulfide group-containing silane compounds such as (trimethylsilyl) [3-(trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3- (methyldimethoxysilyl) propyl] sulfide, (trimethylsilyl) [3- (methyldiethoxysilyl) propyl] sulfide, (trimethylsilyl) [3- (methyldipropoxysilyl) propyl] sulfide, and (trimethylsilyl) [3- (methyldibutoxysilyl) propyl] sulfide;
N-substituted aziridine compound such as ethyleneimine and propyleneimine; alkoxysilanes such as methyltriethoxy silane, N, N-bis (trimethylsilyl) -3-aminopropyltrimethoxysilane, N, N-bis (trimethylsilyl) -3-aminopropyltriethoxysilane, N, N-bis (trimethylsilyl) aminoethyltrimethoxysilane and N, N-bis (trimethylsilyl) aminoethyltriethoxysilane;
(thio) benzophenone compounds having an amino group and / or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone and N, N, N', N'-bis-(tetraethylamino) benzophenone;
benzaldehyde compounds having an amino group and / or a substituted amino group such as 4-N, N-dimethylaminobenzaldehyde, 4-N, N-diphenylaminobenzaldehyde and 4-N, N-divinylamino benzaldehyde; N-substituted pyrrolidone such as N-methyl-2-pyrrolidone, N-vinyl-2-pyrrolidone, N-phenyl-2-pyrrolidone, N-t-butyl-2-pyrrolidone and N-methyl-5-methyl-2-pyrrolidone;
N-substituted piperidone such as N-methyl-2-piperidone, N-vinyl-2-piperidone and N-phenyl-2-piperidone; and
N-substituted lactams such as N-methyl-ε-caprolactam, N-phenyl-ε-caprolactam, N-methyl-ω-laurilolactam, N-vinyl-ω-laurillolactam, N-methyl-β-propiolactam and N-phenyl-β-propiolactam. In addition to the above, N, N-bis-(2,3-epoxypropoxy) -aniline, 4,4-methylene-bis- (N, N-glycidyl-aniline), tris-(2,3-epoxypropyl)-1,3,5-triazine-2,4,6-triones, N,N-diethylacetamide, N-methylmaleimide, N, N-diethylurea, 1,3-dimethylethyleneurea , 1,3-divinylethyleneurea, 1,3-diethyl-2-imidazolidinone, 1-methyl-3-ethyl-2-imidazolidinone, 4-N,N-dimethylaminoacetophen, 4-N,N-diethylaminoacetophenone, 1,3-bis (diphenylamino)-2-propanone, 1,7-bis (methylethylamino)-4-heptanone, and the like can be mentioned also. The modification with the above compound (modifier) can be carried out by a known method.

As the modified BR, for example, tin-modified BR can also be used. Tin-modified BR is obtained by polymerizing 1,3-butadiene with a lithium initiator followed by adding a tin compound. A tin-modified BR in which the terminal is further bonded by a tin-carbon bond is preferable.

Examples of lithium initiators include lithium-based compounds such as alkyllithium, aryllithium, vinyllithium, organotinlithium, and organonitrogen lithium compounds, and lithium metal. By using the lithium initiator as an initiator for tin-modified BR, tin-modified BR having a high vinyl content and a low cis content can be produced.

Examples of the tin compounds include tin tetrachloride, butyltin trichloride, dibutyltin dichloride, dioctyltin dichloride, tributyltin chloride, triphenyltin chloride, diphenyldibutyltin, triphenyltin ethoxide, diphenyldimethyltin, ditolyltin chloride, diphenyltin dioctanoate, divinyldiethyltin, tetrabenzyltin, dibutyltin distearate, tetraallyltin, and p-tributyltin styrene.

Content of tin atoms in the tin-modified BR is preferably 50 ppm or more, more preferably 60 ppm or more. On the other hand, it is preferably 3000 ppm or less, more preferably 2500 ppm or less, and further preferably 250 ppm or less.

Further, the molecular weight distribution (Mw/Mn) of tin-modified BR is preferably 2 or less, and more preferably 1.5 or less.

Further, the vinyl bond content in the tin-modified BR is preferably 5% by mass or more, more preferably 7% by mass or more. On the other hand, the vinyl bond content of tin-modified BR is preferably 50% by mass or less, and more preferably 20% by mass or less.

The above described S-modified BR and tin-modified BR may be used alone, or two or more of them may be used in combination.

As BR, for example, products of Ube Industries, Ltd., JSR Corporation, Asahi Kasei Corporation, and Nippon

Zeon Corporation can be used.

(a-3) SBR

In the present embodiment, the rubber component may optionally contain 5 to 25 parts by mass of SBR together with NR, or may be used in combination with the above BR.
The weight average molecular weight of SBR, for example, is more than 100,000 and less than 2 million. The styrene content of SBR is preferably more than 5% by mass, more preferably more than 10% by mass, and further more preferably more than 20% by mass. On the other hand, it is preferably less than 50% by mass, more preferably less than 40% by mass, and further more preferably less than 35% by mass. The vinyl bond amount of SBR is, for example, more than 5% by mass and less than 70% by mass. The structure identification of SBR (measurement of styrene content and vinyl bond amount) can be performed using, for example, an apparatus of the JNM-ECA series manufactured by JEOL Ltd.
The SBR is not particularly limited, and for example, emulsion-polymerized styrene-butadiene rubber (E-SBR), solution-polymerized styrene-butadiene rubber (S-SBR) and the like can be used. The SBR may be either a non-modified SBR or a modified SBR. These may be used alone or in combination of two or more.
The modified SBR may be any SBR having a functional group that interacts with a filler such as silica. Examples thereof include SBR (terminal modified SBR having the functional group at the end) in which at least one end of the SBR is modified with a compound having the above functional group (modifying agent), main chain modified SBR having the functional group in the main chain, and main chain terminal modified SBR having the functional group in the main chain and the terminal (for example, main chain terminal modified SBR having the above functional group in the main chain and at least one end modified with the above modifying agent) and terminally modified SBR which is modified (coupling) by a polyfunctional compound having two or more epoxy groups in the molecule and into which a hydroxyl group or an epoxy group has been introduced.
As the SBR, for example, SBR manufactured and sold by Sumitomo Chemical Co., Ltd., JSR Corporation, Asahi Kasei Corporation, Nippon Zeon Corporation, etc. can be used. The SBR may be used alone or in combination of two or more.

(a-4) Other rubber components

In addition, as other rubber components, if necessary, rubber (polymer) generally used for manufacturing tires such as nitrile rubber (NBR) may be included.

(b) Compounding materials other than rubber components

(b-1) Filler

In the present embodiment, the sidewall rubber composition preferably contains a filler. Specific examples of the filler include silica, carbon black, graphite, calcium carbonate, talc, alumina, clay, aluminum hydroxide, and mica. Among these, carbon black can be preferably used as the reinforcing agent. It is also preferable to use silica as a reinforcing agent, if necessary, and, in this case, it is preferable to use it together with a silane coupling agent.

(i) Carbon black

The sidewall rubber composition preferably contains carbon black. The content of carbon black is preferably 10 parts by mass or more and 100 parts by mass or less, more preferably 15 parts by mass or more and 60 parts by mass or less, and further preferably 25 parts by mass or more and 55 parts by mass or less with respect to 100 parts by mass of the rubber component.
Carbon black is not particularly limited, and examples thereof include furnace black (furnace carbon black) such as SAF, ISAF, HAF, MAF, FEF, SRF, GPF, APF, FF, CF, SCF and ECF; acetylene black (acetylene carbon black); thermal blacks (thermal carbon blacks) such as FT and MT; and channel blacks (channel carbon blacks) such as EPC, MPC and CC. These may be used individually by 1 type, and may use 2 or more types together.
Nitrogen adsorption specific surface area ($N_2SA$) of carbon black is, for example, more than 30 $m^2/g$ and less than 250 $m^2/g$. The amount of dibutyl phthalate (DBP) absorbed by carbon black is, for example, more than 50 ml/100 g and less than 250 ml/100 g. The nitrogen adsorption specific surface area of carbon black is measured according to ASTM D4820-93, and the amount of DBP absorbed is measured according to ASTM D2414-93.
The specific carbon black is not particularly limited, and examples thereof include N134, N110, N220, N234, N219, N339, N330, N326, N351, N550, and N762. Commercially available products include, for example, products of Asahi Carbon Co., Ltd., Cabot Japan Co., Ltd., Tokai Carbon Co., Ltd., Mitsubishi Chemical Corporation, Lion Corporation,

Shin Nikka Carbon Co., Ltd., Columbia Carbon Co., Ltd., etc. These may be used alone or in combination of two or more.

(ii) Silica

The sidewall rubber composition preferably contains silica. The BET specific surface area of the silica is preferably more than 140 $m^2/g$, more preferably more than 160 $m^2/g$, from the viewpoint of obtaining good durability performance. On the other hand, from the viewpoint of obtaining good rolling resistance at high-speed running, it is preferably less than 250 $m^2/g$, and more preferably less than 220 $m^2/g$.

Moreover, the content of the silica with respect to 100 parts by mass of the rubber component is preferably 3 parts by mass or more, and more preferably 5 parts by mass or more when the silane coupling agent is not used in combination. On the other hand, it is preferably 25 parts by mass or less and more preferably 15 parts by mass or less. When performing combined use with a silane coupling agent, it is preferably 25 mass parts or more. On the other hand, it is preferably 50 parts by mass or less, more preferably 40 parts by mass or less, and further preferably 30 parts by mass or less. The BET specific surface area mentioned above is the value of $N_2SA$ measured by the BET method according to ASTM D3037-93.

Examples of silica include dry silica (anhydrous silica) and wet silica (hydrous silica). Among them, wet silica is preferable because it has large number of silanol groups.

As the silica, for example, products of Degussa, Rhodia, Tosoh Silica Co., Ltd., Solvay Japan Co., Ltd., Tokuyama Corporation, etc. can be used.

(iii) Silane coupling agent

As described above, when using silica, it is possible to use a silane coupling agent together. The silane coupling agent is not particularly limited, and examples thereof include sulfide-based ones such as bis(3-triethoxysilylpropyl) tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;

mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as γ-glycidoxypropyltriethoxysilane and γ-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane and 3-chloropropyltriethoxysilane. These may be used alone or in combination of two or more.

As the silane coupling agent, for example, products of Degussa, Momentive, Shin-etsu Silicone Co., Ltd., Tokyo Chemical Industry Co., Ltd., Azumax Co., Ltd., Toray Dow Corning Co., Ltd., etc. can be used.

The content of the silane coupling agent is, for example, more than 3 parts by mass and less than 15 parts by mass with respect to 100 parts by mass of silica.

(iv) Other fillers

The sidewall rubber composition may further contain fillers such as graphite, calcium carbonate, talc, alumina, clay, aluminum hydroxide, and mica, which are generally used in the tire industry, in addition to the above-mentioned carbon black and silica. These contents are, for example, more than 0.1 part by mass and less than 200 parts by mass with respect to 100 parts by mass of the rubber component.

(b-2) Curable resin component

The sidewall rubber composition may contain a curable resin component such as a modified resorcin resin and a modified phenol resin, if necessary.

Specific examples of the modified resorcin resin include Sumikanol 620 (modified resorcin resin) manufactured by Taoka Chemical Industry Co., Ltd., and examples of the modified phenol resin include PR12686 (cashew oil modified phenolic resin) manufactured by Sumitomo Bakelite Co., Ltd.

The content of the curable resin component is preferably 1 part by mass or more, and more preferably 2 parts by mass or more, with respect to 100 parts by mass of the rubber component, for example, from the viewpoint of sufficiently improving the complex elastic modulus and obtaining a large reaction force during deformation. On the other hand, from the viewpoint of maintaining breaking strength, it is preferably 10 parts by mass or less, and more preferably 8 parts by mass or less.

When using the modified resorcin resin, it is preferable to also contain a methylene donor as a curing agent. Examples of the methylene donor include hexamethylenetetramine (HMT), hexamethoxymethylol melamine (HMMM) and hexamethylol melamine pentamethyl ether (HMMPME). It is preferably contained in an amount of 5 parts by mass or more and about 15 parts by mass, with respect to 100 parts by mass of the curable resin component. If it is too small, a sufficient complex elastic modulus may not be obtained. On the other hand, if the amount is too large, the viscosity of the rubber may increase and the workability may deteriorate.

As a specific methylene donor, for example, Sumikanol 507 manufactured by Taoka Chemical Co., Ltd. can be used.

(b-3) Plasticizer component

The rubber composition may contain oil (including extender oil), liquid rubber, and resin as plasticizer components as components for softening rubber. The plasticizer component is a component that can be extracted from the vulcanized rubber with acetone. The total content of the plasticizer component is preferably more than 5 parts by mass, and more preferably more than 10 parts by mass, per 100 parts by mass of the rubber component. On the other hand, it is preferably less than 70 parts by mass, more preferably less than 50 parts by mass, and further preferably less than 30 parts by mass. The content of oil also includes the amount of oil contained in the rubber (oil-extended rubber).

(i) Oil

Examples of oils include mineral oils (commonly referred to as process oils), vegetable oils, or mixtures thereof. As the mineral oil (process oil), for example, paraffinic process oil, aromatic process oil, naphthenic process oil and the like can be used. Vegetable oils include castor oil, cottonseed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, tung oil and the like. These may be used alone or in combination of two or more.

As the specific process oils (mineral oils), products of Idemitsu Kosan Co., Ltd., Sankyo Yuka Kogyo Co., Ltd., Japan Energy Co., Ltd., Olisoy Co., Ltd., H & R Co., Ltd., Toyokuni Seiyu Co., Ltd., Showa Shell Sekiyu Co., Ltd., and Fuji Kosan Co., Ltd., etc. can be used.

(ii) liquid rubber

The liquid rubber mentioned as a plasticizer is a polymer that is in a liquid state at room temperature (25°C), and is a rubber component that can be extracted from a vulcanized tire by acetone extraction. Examples of liquid rubbers include farnesene-based polymers, liquid diene-based polymers, and hydrogenated products thereof.

The farnesene-based polymer is a polymer obtained by polymerizing farnesene, and has a structural unit based on farnesene. Farnesene includes isomers such as α-farnesene ((3E, 7E) -3,7,11-trimethyl-1,3,6,10-dodecatetraene) and β-farnesene (7,11-dimethyl-3-methylene-1, 6,10-dodecatorien).

The farnesene-based polymer may be a homopolymer of farnesene (farnesene homopolymer) or a copolymer of farnesene and a vinyl monomer (farnesene-vinyl monomer copolymer).

Examples of the liquid diene polymer include a liquid styrene-butadiene copolymer (liquid SBR), a liquid butadiene polymer (liquid BR), a liquid isoprene polymer (liquid IR), and a liquid styrene isoprene copolymer (liquid SIR).

The liquid diene polymer has a polystyrene-equivalent weight average molecular weight (Mw) measured by gel permeation chromatography (GPC) of, for example, more than $1.0 \times 10^3$ and less than $2.0 \times 10^5$. In the present specification, Mw of the liquid diene polymer is a polystyrene conversion value measured by gel permeation chromatography (GPC).

The content of the liquid rubber (total content of the liquid farnesene-based polymer, the liquid diene-based polymer, etc.) is, for example, more than 1 part by mass and less than 100 parts by mass with respect to 100 parts by mass of the rubber component.

As the liquid rubber, for example, products of Kuraray Co., Ltd. and Clay Valley Co., Ltd. can be used.

(iii) Resin component

The resin component also functions as a tackifying component and may be solid or liquid at room temperature. Examples of specific resin components include rosin-based resins, styrene-based resins, coumarone-based resins, terpene-based resins, C5 resins, C9 resins, C5C9 resins, and acrylic resins, and two or more of them may be used in combination. The content of the resin component is preferably more than 2 parts by mass and less than 45 parts by mass, and more preferably less than 30 parts by mass, with respect to 100 parts by mass of the rubber component.

The rosin-based resin is a resin containing rosin acid as a main component, which is obtained by processing pine fat. This rosin-based resin (rosins) can be classified according to the presence or absence of modification, and can be classified into non-modified rosin (unmodified rosin) and rosin modified product (rosin derivative). Non-modified rosins include tall rosins (also known as tall oil rosins), gum rosins, wood rosins, asymmetric rosins, polymerized rosins, hydrogenated rosins, and other chemically modified rosins. The rosin-modified product is a modified product of non-modified rosin, and examples thereof include rosin esters, unsaturated carboxylic acid-modified rosins, unsaturated carboxylic acid-modified rosin esters, rosin amide compounds, and amine salts of rosin.

The styrene-based resin is a polymer using a styrene-based monomer as a constituent monomer, and examples thereof include a polymer obtained by polymerizing a styrene-based monomer as a main component (50% by mass or more). Specifically, a homopolymer obtained by independently polymerizing styrene-based monomers, such as styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene and p-chlorostyrene, a copolymer obtained by copolymerizing two or more types of styrene-based monomers, and a copolymer obtained by copolymerizing a styrene-based monomer and another monomer that can be copolymerized with the styrene-based monomer.

Examples of the other monomer include acrylonitriles such as acrylonitrile and methacrylonitrile; unsaturated carboxylic acids such as acrylic acid and methacrylic acid; unsaturated carboxylic acid esters such as methyl acrylate and methyl methacrylate; dienes such as chloroprene, butadiene, and isoprene; olefins such as 1-butene and 1-pentene; and α, β-unsaturated carboxylic acids and acid anhydrides thereof such as maleic anhydride.

Among the cumarone-based resins, the cumarone indene resin is preferable. The cumarone indene resin is a resin containing cumarone and indene as monomer components constituting the skeleton (main chain) of the resin. Examples of the monomer component contained in the skeleton other than cumarone and indene include styrene, α-methylstyrene, methylindene, and vinyltoluene.

The content of the coumarone-indene resin is, for example, more than 1.0 parts by mass and less than 50.0 parts by mass with respect to 100 parts by mass of the rubber component.

The hydroxyl value (OH value) of the cumarone indene resin is, for example, more than 15 mgKOH/g and less than 150 mgKOH/g. The OH value is the amount of potassium hydroxide required to neutralize acetic acid bonded to a hydroxyl group when acetylating 1 g of the resin, and is expressed in milligrams. The OH value is a value measured by a potentiometric titration (JIS K 0070: 1992).

The softening point of the cumarone indene resin is, for example, more than 30°C and less than 160°C. The softening point is the temperature at which the ball drops when the softening point defined in JIS K 6220-1: 2001 is measured by a ring-ball type softening point measuring device.

Examples of the terpene-based resin include polyterpenes, terpene phenols, and aromatic-modified terpene resins. Polyterpenes are resins obtained by polymerizing terpene compounds, and their hydrogenated products. Terpene compounds are hydrocarbons represented by a composition of $(C_5H_8)_n$ and their oxygenated derivatives, and are compounds having a terpene, classified in monoterpenes ($C_{10}H_{16}$), sesquiterpene ($C_{15}H_{24}$), diterpenes ($C_{20}H_{32}$), etc., as a basic skeleton. Examples thereof include α-pinene, β-pinene, dipentene, limonene, myrcene, aloossimen, ocimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins, such as α-pinene resin, β-pinene resin, limonene resin, dipentene resin, and β-pinene/limonene resin, made from the above-mentioned terpene compound, and hydrogenated terpene resin obtained by hydrogenating the terpene resin can also be mentioned as an example. Examples of the terpene phenol include a resin obtained by copolymerizing the above-mentioned terpene compound and a phenol-based compound, and a resin obtained by hydrogenating the resin. Specifically, a resin obtained by condensing the above-mentioned terpene compound, phenolic compound and the formalin can be mentioned. Examples of the phenolic compound include phenol, bisphenol A, cresol, xylenol and the like. Examples of the aromatic-modified terpene resin include a resin obtained by modifying the terpene resin with an aromatic compound, and a resin obtained by hydrogenating the resin. The aromatic compound is not particularly limited as long as it has an aromatic ring, but for example, phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthol; styrene derivatives such as styrene, alkylstyrene, alkoxystyrene, and unsaturated hydrocarbon group-containing styrene; cumarone; inden; and the like can be mentioned.

The "C5 resin" refers to a resin obtained by polymerizing a C5 fraction. Examples of the C5 fraction include

petroleum fractions having 4 to 5 carbon atoms equivalent to cyclopentadiene, pentene, pentadiene, isoprene, and the like. As the C5 petroleum resin, a dicyclopentadiene resin (DCPD resin) is preferably used.

The "C9 resin" refers to a resin obtained by polymerizing a C9 fraction, and may be hydrogenated or modified. Examples of the C9 fraction include petroleum fractions having 8 to 10 carbon atoms equivalent to vinyltoluene, alkylstyrene, indene, methyl indene and the like. As a specific example, a cumarone indene resin, a cumarone resin, an indene resin, and an aromatic vinyl-based resin are preferably used. As the aromatic vinyl resin, a homopolymer of α-methylstyrene or styrene or a copolymer of α-methylstyrene and styrene is preferable because it is economical, easy to process, and has excellent heat generation. A copolymer of α-methylstyrene and styrene is more preferable. As the aromatic vinyl resin, for example, those commercially available from Clayton, Eastman Chemical, etc. can be used.

The "C5C9 resin" refers to a resin obtained by copolymerizing the C5 fraction and the C9 fraction, and may be hydrogenated or modified. Examples of the C5 fraction and the C9 fraction include the above-mentioned petroleum fraction. As the C5C9 resin, for example, those commercially available from Tosoh Corporation, LUHUA, etc. can be used.

The acrylic resin is not particularly limited. For example, a solvent-free acrylic resin can be used.

As the solvent-free acrylic resin, a (meth) acrylic resin (polymer), synthesized by a high-temperature continuous polymerization method (high-temperature continuous lump polymerization method) described in USP4,414,370, JP-A-S59-6207, JP-B-H5-58005, JP-A-H1-313522, USP5,010,166, Toagosei Annual Report TREND2000 No. 3, pp42-45, etc. without using polymerization initiators, chain transfer agents, organic solvents, etc. as auxiliary raw materials as much as possible, can be mentioned. Note that, "(meth) acrylic" means meth acrylic and acrylic in the present disclosure.

Examples of the monomer component constituting the acrylic resin include (meta) acrylic acid derivatives such as (meth) acrylic acid, (meth) acrylic acid ester (alkyl ester, aryl ester, aralkyl ester, etc.), (meth) acrylamide, and (meth) acrylamide derivative.

As the monomer component constituting the acrylic resin, aromatic vinyl such as styrene, α-methylstyrene, vinyltoluene, vinylnaphthalene, divinylbenzene, trivinylbenzene, divinylnaphthalene, and the like can be used, together with (meth) acrylic acid and/or (meth) acrylic acid derivative.

The acrylic resin may be a resin composed of only a (meth) acrylic component or a resin also having a component other than the (meth) acrylic component as a component. The acrylic resin may have a hydroxyl group, a carboxyl group, a silanol group or the like.

As the resin component, for example, products of Maruzen Petrochemical Co., Ltd., Sumitomo Bakelite Co., Ltd., Yasuhara Chemical Co., Ltd., Toso Co., Ltd., Rutgers Chemicals Co., Ltd., BASF, Arizona Chemical Co., Ltd., Nitto Chemical Co., Ltd., Co., Ltd, Nippon Catalyst, JX Energy Co., Ltd., Arakawa Chemical Industry Co., Ltd., or Taoka Chemical Industry Co., Ltd. can be used.

(b-4) Organic acid cobalt

The sidewall rubber composition may contain organic acid cobalt, if necessary.

Examples of organic acid cobalt include cobalt stearate, cobalt naphthenate, cobalt neodecanoate, and cobalt boron-3 neodecanoate.

The content of the organic acid cobalt is preferably 500 ppm or more, more preferably 700 ppm or more, and further preferably 900 ppm or more as the cobalt concentration in the sidewall rubber composition. On the other hand, it is preferably 1500 ppm or less, and more preferably 1300 ppm or less.

(b-5) Anti-reversion agent

The sidewall rubber composition preferably contains a reversion inhibitor as necessary. This suppresses reversion and improves durability. The content of the anti-reversion agent is preferably 0.1 parts by mass or more and 3 parts by mass or less, more preferably 0.2 parts by mass or more and 2.5 parts by mass or less, and further preferably 0.3 parts by mass or more and 2 parts by mass or less with respect to 100 parts by mass of the rubber component. As a specific anti-reversion agent, for example, Parkalink 900 (1,3-bis(citraconimidomethyl)benzene) manufactured by Flexis can be used.

(f) Anti-aging agent

The sidewall rubber composition preferably contains an anti-aging agent. The content of the anti-aging agent is, for example, more than 1 part by mass and less than 10 parts by mass with respect to 100 parts by mass of the rubber component.

Examples of the anti-aging agent include naphthylamine-based anti-aging agents such as phenyl-α-naphthylamine; diphenylamine-based anti-aging agents such as octylated diphenylamine and 4,4'-bis (α, α'-dimethylbenzyl) diphenylamine; p-phenylenediamine-based anti-aging agent such as N-isopropyl-N'-phenyl-p-phenylenediamine,

N-(1,3-dimethylbutyl)-N'-phenyl-p-phenylenediamine, and N, N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, and styrenated phenol; and bis, tris, polyphenolic anti-aging agent such as tetrakis-[methylene-3-(3',5'-di-t-butyl-4'-hydroxyphenyl) propionate] methane. These may be used alone or in combination of two or more.

As the anti-aging agent, for example, products of Seiko Chemical Co., Ltd., Sumitomo Chemical Co., Ltd., Ouchi Shinko Chemical Industry Co., Ltd., Flexis Co., Ltd., etc. can be used.

(b-7) Stearic acid

The sidewall rubber composition may contain stearic acid. The content of stearic acid is, for example, more than 0.5 parts by mass and less than 10.0 parts by mass with respect to 100 parts by mass of the rubber component. As the stearic acid, conventionally known ones can be used, and for example, products of NOF Corporation, Kao Corporation, Fujifilm Wako Pure Chemical Industries, Ltd., or Chiba Fatty Acid Co., Ltd. can be used.

(b-8) Zinc oxide

The sidewall rubber composition may contain zinc oxide. The content of zinc oxide is, for example, more than 0.5 parts by mass and less than 15 parts by mass with respect to 100 parts by mass of the rubber component. As the zinc oxide, conventionally known zinc oxide can be used. For example, products of Mitsui Mining & Smelting Co., Ltd., Toho Zinc Co., Ltd., HakusuiTech Co., Ltd., Shodo Chemical Industry Co., Ltd., Sakai Chemical Industry Co., Ltd., etc. can be used.

(b-9) Cross-linking agent and vulcanization accelerator

The sidewall rubber composition preferably contains a cross-linking agent such as sulfur. The content of the cross-linking agent is, for example, more than 0.1 part by mass and less than 10.0 parts by mass with respect to 100 parts by mass of the rubber component.

Examples of sulfur include powdered sulfur, precipitated sulfur, colloidal sulfur, insoluble sulfur, highly dispersible sulfur and soluble sulfur, which are commonly used in the rubber industry. These may be used alone or in combination of two or more.

As the sulfur, for example, products of Tsurumi Chemical Industry Co., Ltd., Karuizawa Sulfur Co., Ltd., Shikoku Chemicals Corporation, Flexis Co., Ltd., Nippon Kanryu Industry Co., Ltd., Hosoi Chemical Industry Co., Ltd., etc. can be used.

Examples of the cross-linking agent other than sulfur include a vulcanizing agent containing a sulfur atom such as Tackylol V200 manufactured by Taoka Chemical Industry Co., Ltd., Duralink HTS (1,6-hexamethylene-sodium dithiosulfate dihydrate) manufactured by Flexis, and KA9188 (1,6-bis (N, N'-dibenzylthiocarbamoyldithio) hexane) manufactured by Lanxess; and an organic peroxide such as dicumyl peroxide.

The sidewall rubber composition preferably contains a vulcanization accelerator. The content of the vulcanization accelerator is, for example, more than 0.3 parts by mass and less than 10.0 parts by mass with respect to 100 parts by mass of the rubber component.

Examples of the vulcanization accelerator include thiazole-based vulcanization accelerator such as 2-mercaptobenzothiazole, di-2-benzothiazolyldisulfide, and N-cyclohexyl-2-benzothiazylsulfenamide; thiuram-based vulcanization accelerators such as tetramethylthiuram disulfide (TMTD), tetrabenzyl thiuram disulfide (TBzTD), and tetrakis (2-ethylhexyl) thiuram disulfide (TOT-N); sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, N-oxyethylene-2-benzothiazolesulfenamide, and N, N'-diisopropyl-2-benzothiazolesulfenamide; and guanidine-based vulcanization accelerators such as diphenylguanidine, dioltotrilguanidine, and orthotrilbiguanidine can be mentioned. These may be used alone or in combination of two or more.

(b-10) Other

In addition to the above components, the sidewall rubber composition may further contain additives commonly used in the tire industry, such as fatty acid metal salts, carboxylic acid metal salts, organic peroxides, and the like. The content of these additives is, for example, more than 0.1 parts by mass and less than 200 parts by mass with respect to 100 parts by mass of the rubber component.

(2) Preparation of sidewall rubber composition

The sidewall rubber composition is produced by a general method, for example, a manufacturing method including a base kneading step of kneading a rubber component with a filler such as carbon black, and a finish kneading step of kneading the kneaded product obtained in the base kneading step and a cross-linking agent.
Kneading can be performed using a known (closed) kneader such as a Banbury mixer, kneader, open roll, or the like.
The kneading temperature of the base kneading step is, for example, more than 50°C and less than 200°C, and the kneading time is, for example, more than 30 seconds and less than 30 minutes. In the base kneading step, in addition to the above components, compounding agents conventionally used in the rubber industry, such as plasticizer components including oil, stearic acid, zinc oxide, antiaging agents, waxes, vulcanization accelerators, etc., may be appropriately added and knead as needed.
In the finish kneading step, the kneaded product obtained in the base kneading step and the cross-linking agent are kneaded. The kneading temperature in the finish kneading step is, for example, more than room temperature and less than 80°C, and the kneading time is, for example, more than 1 minute and less than 15 minutes. In the finish kneading step, in addition to the above components, a vulcanization accelerator, zinc oxide and the like may be appropriately added and kneaded as needed.

(3) Preparation of side part

A side portion can be produced by molding the obtained sidewall rubber composition into a predetermined shape.

C. Manufacture of tires

The tire according to the present embodiment can be produced as an unvulcanized tire by molding the belt member and the side portion obtained above together with other tire members by a normal method on a tire building machine.
Specifically, the inner liner as a member to ensure the airtightness of the tire, the carcass as a member to withstand the load, impact and filling air pressure received by the tire, a belt member as a member to strongly tighten the carcass to increase the rigidity of the tread, and the like are wound on a molded drum, then both ends of the carcass are fixed to both side edges and a bead part as a member for fixing the tire to the rim is arranged to form a toroid shape, followed by pasting a tread to the central portion of the outer circumference and a sidewall to the outer side in the radial direction to form a side portion; and an unvulcanized tire is manufactured.
In the present embodiment, as described above, the belt layer may be provided in a plurality of layers from the viewpoint of increasing the binding force to the tread during running and facilitating suppression of the growth of the outer diameter. At this time, the average distance D (mm) between the cords of the belt layers in the tread portion of the vulcanized tire is preferably 0.5 mm or less. It is preferable that the angle between the monofilament cords in the tread portion and a straight line parallel to the tire circumferential direction is 10° or more and 35° or less, and the cords of adjacent belt layers are arranged so as to intersect each other.
The angle of the monofilament cord is the angle of the monofilament cord with respect to the tire circumferential direction when the tire is not filled with air, and can be confirmed by peeling off the tread portion from the radially outer side of the tire.
Then, the produced unvulcanized tire is heated and pressurized in a vulcanizer to obtain a tire. The vulcanization step can be carried out by applying a known vulcanization means. The vulcanization temperature is, for example, higher than 120°C and lower than 200°C, and the vulcanization time is, for example, more than 5 minutes and less than 15 minutes.
At this time, the tire is molded so as to satisfy the above-described (formula 1) and (formula 2) when installed on a standardized rim and having an internal pressure of 250 kPa.
Specific tires to which the present invention is preferably applied include, for example, 145/60R18, 145/60R19, 155/55R18, 155/55R19, 155/70R17, 155/70R19, 165/55R20, 165/55R21, 165/60R19, 165/65R19, 165/70R18, 175/55R19, 175/55R20, 175/55R22, 175/60R18, 185/55R19, 185/60R20, 195/50R20, and 195/55R20.
The tire of the present embodiment can be used as various types of tires classified into passenger car tires, truck and bus tires, motorcycle tires, etc. However, it is preferable to apply it to a passenger car tire, that is, a tire mounted on a four-wheeled vehicle and having a maximum load capacity of 1000 kg or less, among tires which satisfy (formula 1) and (formula 2). By satisfying (formula 1) and (formula 2), the tires can contribute more favorably for solving the problem in the present invention, that is, a pneumatic tire with excellent durability at high-speed running is provided.
The above-mentioned maximum load capacity is a value about 50 to 100 kg smaller than the maximum load capacity defined for each tire in the standard system including the standard on which the tire is based, for example, the

maximum load capacity based on the load index (LI) defined by the JATMA standard (Japan Automobile Tire Manufacturers Association standard). Specifically, it is calculated using the following two formulas based on the tire section width Wt (mm), the tire section height Ht (mm) and the tire outer diameter Dt (mm) when the tire is installed on a standardized rim, the internal pressure is set to 250 kPa, and no load is applied.

$$V\ (mm^3) = \{(Dt/2)^2 - (Dt/2\text{-}Ht)^2\} \times \pi \times Wt$$

$$WL\ (kg) = 0.000011 \times V + 175$$

Note that V is the volume of the space occupied by the tire (virtual volume), and (Dt/2 - Ht) is the rim diameter (mm).

The above maximum load capacity is not particularly limited as long as it is 1000 kg or less, but generally, as the maximum load capacity increases, the tire weight tends to increase and the impact transmitted to the tire tends to increase, so it is preferably 900 kg or less, more preferably 800 kg or less, and further preferably 700 kg or less.

Here, the tire weight is preferably 20 kg or less, more preferably 15 kg or less, and further preferably 12 kg or less, 10 kg or less, 8 kg or less, from the viewpoint of softening the impact transmitted to the tire. The term "tire weight" as used herein refers to the weight of the entire tire, including sealants, sponges, three-dimensional mesh structures, electronic parts, etc., if they are provided on the inner cavity surface of the tire. Moreover, the tire weight can be appropriately adjusted by the thickness and width of each member constituting the tire, the specific gravity of the rubber composition, the number of steel cords arranged in the belt reinforcing layer, the structure of the bead wires, and the like.

[EXAMPLES]

Hereinafter, the present invention will be described more specifically by examples.

1. Preparation of belt members

First, 100 parts by mass of NR (RSS3), 55 parts by mass of carbon black (Show Black N326 manufactured by Cabot Japan Co., Ltd.), 0.5 parts by mass of cross-linking aid (Duralink HTS manufactured by Flexsys), 3 parts by mass of curable resin component (PR12686 manufactured by Sumitomo Bakelite Co., Ltd.), 1.5 parts by mass of organic acid cobalt (DICNATE NBC-2 manufactured by DIC Corporation), 1.5 parts by mass of curing agent (Sumikanol 507 manufactured by Taoka Chemical Industry Co., Ltd.), 10 parts by mass of zinc oxide (zinc white No. 1 manufactured by Mitsui Mining & Smelting Co., Ltd.), 1 part by mass of anti-aging agent (Nocrack 6C manufactured by Ouchi Shinko Chemical Industry Co., Ltd.), 0.5 parts by mass of anti-aging agent (Antage RD manufactured by Kawaguchi Chemical Industry Co., Ltd.), 1 part by mass of stearic acid ("Tsubaki" manufactured by NOF Corporation), 7 parts by mass of sulfur (powdered sulfur manufactured by Tsurumi Chemical Industry Co., Ltd.), and 1.2 parts by mass of a vulcanization accelerator (NOCCELER DZ manufactured by Ouchi Shinko Chemical Industry Co., Ltd.) were prepared as compounding materials for the rubber composition for the belt.

Next, using a Banbury mixer, materials other than the curing agent, sulfur and vulcanization accelerator were kneaded at 150°C for 5 minutes to obtain a kneaded product. Thereafter, a curing agent, sulfur and a vulcanization accelerator were added to the resulting kneaded product, and the mixture was kneaded at 80°C for 5 minutes using an open roll to obtain a rubber composition for belts.

Next, after arranging the steel cords having the configurations and cord outer diameters (mm) shown in Tables 1 and 2 with the ends (cords/5 cm) shown in Tables 1 and 2, the rubber composition for belts obtained above was coated on both sides of them to prepare a belt member. At this time, the same amount of rubber was topped on the top and bottom so that the steel cord was arranged in the center of the thickness direction of the belt member, and the thickness was appropriately adjusted so that the steel cord has the average distance D shown in Tables 1 and 2 between one set of belt layers in the tire after vulcanization.

2. Preparation of the side portion

Separately, a side portion was prepared using a sidewall rubber composition.

(1) Compounding material for sidewall rubber composition

First, each compounding material shown below was prepared.

(a) Rubber component

(a-1) NR: TSR20
(a-2) BR: UBEPOL-BR150B manufactured by Ube Industries, Ltd. (Cis content: 97% by mass)

(b) Compounding materials other than rubber components

(b-1) Carbon black: Show Black N550 manufactured by Cabot Japan Co., Ltd. ($N_2SA$: 42 $m^2/g$, DOP oil absorption: 115 ml/100 g)
(b-2) Oil: Process X-140 manufactured by Japan Energy Co., Ltd.
(b-3) Wax: Sannok wax manufactured by Ouchi Shinko Kagaku Co., Ltd.
(b-4) Anti-aging agent-1: Nocrack 6C, manufactured by Ouchi Shinko Chemical Industry Co., Ltd. (N-phenyl-N'-(1,3-dimethylbutyl)-p-phenylenediamine)
(b-5) Anti-aging agent -2: Antage RD manufactured by Kawaguchi Chemical Industry Co., Ltd. (2,2,4-trimethyl-1,2-dihydroquinoline)
(b-6) Zinc oxide: zinc oxide No. 1 manufactured by Mitsui Mining & Smelting Co., Ltd.
(b-7) Stearic acid: stearic acid "Tsubaki" manufactured by NOF Corporation (b-8) Sulfur: powdered sulfur manufactured by Tsurumi Chemical Industry Co., Ltd.
(b-9) Vulcanization accelerator: NOCCELER DZ manufactured by Ouchi Shinko Chemical Industry Co., Ltd. (N-tert-butyl-2-benzothiazolylsulfenamide)

(2) Production of sidewall rubber composition

Materials other than sulfur and vulcanization accelerator were kneaded at 150°C for 5 minutes using a Banbury mixer according to the formulation contents shown in Tables 1 and 2 to obtain a kneaded product. Each compounding quantity is a mass part.
Next, a curing agent, sulfur and a vulcanization accelerator were added to the resulting kneaded product, and the mixture was kneaded at 80°C for 5 minutes using an open roll to obtain a sidewall rubber composition.
Next, using the obtained sidewall rubber composition, a side portion having a predetermined shape was produced.

3. Manufacture of tires

The side portion obtained above and the belt member, produced by pasting two layers of the belt member so that the steel cords in the belt member intersect each other at the angles shown in Tables 1 to 4 respect to a straight line parallel to the tire circumferential direction, were pasted with other tire members to form an unvulcanized tire. Then, the unvulcanized tire was press-vulcanized for 10 minutes at 170 °C to produce each test tire (Examples 1 to 13 and Comparative Examples 1 to 7) having each of the sizes shown in Tables 1 and 2.
In each test tire, the above-mentioned ($L_{80}/L_0$) was 0.5, the total cross-sectional area of the circumferential grooves was 22% of the cross-sectional area of the tread portion, and the total volume of the lateral grooves was 3.5% of the tread volume.

4. Calculation of parameters

After that, the cross-sectional width Wt (mm) and the side portion height T (mm) of each test tire were obtained. At the same time, the rubber composition was cut out from the side portion of each test tire to prepare a rubber test piece for viscoelasticity measurement having a length of 40 mm and a width of 4 mm, and E* (MPa) was measured under the conditions of temperature of 70 °C, initial strain of 5%, dynamic strain of $\pm$1%, frequency of 10 Hz, and deformation mode: elongation, using Eplexor series manufactured by GABO. Results are shown in Tables 1 and 2. For those using the same rubber composition, the viscoelasticity of the rubber composition was measured from each specification, and the average value was obtained.
Then, using the obtained results, "e/ (139.5 - 0.3Wt)", "e/ (191.5 - 0.3Wt)", "e/ (110.84 - 0.1667Wt) " and "(E*/T)$\times$100" were calculated.

5. Performance evaluation test (evaluation of durability performance)

Each test tire is mounted to all wheels of a vehicle (domestic FF vehicle, displacement 2000cc), and after filling air so that the internal pressure is 250kPa, the vehicle ran 10 laps on a test course with a dry road surface at a speed of 50 km/h in an overloaded state, and, then, ran over uneven road surfaces at a speed of 80 km/h repeatedly. Then, the car was lapped again at a speed of 50 km/h, thereafter the speed was gradually increased, and the speed was measured when the driver felt an abnormality.

Next, with the result in Comparative Example 2 set to 100, the results were indexed based on the following formula to relatively evaluate the durability performance. A higher value indicates better durability.

$$\text{Durability} = [(\text{Result of test tire})/(\text{Result of Comparative Example 2})] \times 100$$

The evaluation results are shown in Tables 1 and 2.

[Table 1]

| | | Example | | | | | | | | | |
|---|---|---|---|---|---|---|---|---|---|---|---|
| | | 1 | 2 | 3 | 4 | 5 | 6 | 7 | 8 | 9 | 10 |
| Size | | 215/7 0R16 | 215/7 0R16 | 215/7 0R16 | 215/7 0R16 | 215/7 0R16 | 235/5 5R18 | 235/5 5R18 | 235/5 5R18 | 235/5 5R18 | 285/3 5R20 |
| Formu -la-tion | NR | 60 | 60 | 60 | 60 | 60 | 60 | 60 | 60 | 60 | 60 |
| | BR | 40 | 40 | 40 | 40 | 40 | 40 | 40 | 40 | 40 | 40 |
| | Carbon Black | 57 | 57 | 57 | 57 | 57 | 57 | 57 | 57 | 50 | 57 |
| | Oil | 5 | 5 | 5 | 5 | 5 | 5 | 5 | 5 | 10 | 5 |
| | Wax | 2.5 | 2.5 | 2.5 | 2.5 | 2.5 | 2.5 | 2.5 | 2.5 | 2.5 | 2.5 |
| | Anti-aging agent-1 | 2 | 2 | 2 | 2 | 2 | 2 | 2 | 2 | 2 | 2 |
| | Anti-aging agent-2 | 1 | 1 | 1 | 1 | 1 | 1 | 1 | 1 | 1 | 1 |
| | Zinc oxide | 3 | 3 | 3 | 3 | 3 | 3 | 3 | 3 | 3 | 3 |
| | Stearic acid | 1.5 | 1.5 | 1.5 | 1.5 | 1.5 | 1.5 | 1.5 | 1.5 | 1.5 | 1.5 |
| | Sulfur | 1.5 | 1.5 | 1.5 | 1.5 | 1.5 | 1.5 | 1.5 | 1.5 | 1.5 | 1.5 |
| | Vulcanization accelerator | 1 | 1 | 1 | 1 | 1 | 1 | 1 | 1 | 1 | 1 |
| Code | Configuration | 1×1 | 1×1 | 1×1 | 1×1 | 1×1 | 1×1 | 1×1 | 1×1 | 1×1 | 1×1 |
| | Cord Outer Diameter (mm) | 0.3 | 0.3 | 0.3 | 0.3 | 0.3 | 0.3 | 0.3 | 0.3 | 0.3 | 0.3 |
| | Ends e (cords/5cm) | 75 | 75 | 75 | 75 | 85 | 68 | 75 | 110 | 75 | 55 |
| Belt layer | Average distance D(mm) | 0.7 | 0.7 | 0.7 | 0.45 | 0.22 | 0.45 | 0.45 | 0.45 | 0.45 | 0.45 |
| | Angle (°) | 40 | 30 | 23 | 23 | 23 | 23 | 23 | 23 | 23 | 23 |
| Parameter | E*(Mpa) | 4.1 | 4.1 | 4.1 | 4.1 | 4.1 | 4.1 | 4.1 | 4.1 | 3.2 | 4.1 |
| | Wt(mm) | 218 | 217 | 218 | 217 | 216 | 240 | 242 | 241 | 242 | 286 |
| | 139.5-0.3Wt | 74.1 | 74.4 | 74.1 | 74.4 | 74.7 | 67.5 | 66.9 | 67.2 | 66.9 | 53.7 |
| | 191.5-0.3Wt | 126.1 | 126.4 | 126.1 | 126.4 | 126.7 | 119.5 | 118.9 | 119.2 | 118.9 | 105.7 |
| | 110.84-0.1667Wt | 74.5 | 74.7 | 74.5 | 74.7 | 74.8 | 70.8 | 70.5 | 70.7 | 70.5 | 63.2 |
| | T(mm) | 150.8 | 150.8 | 150.8 | 150.8 | 150.8 | 128.9 | 128.9 | 128.9 | 128.9 | 100.0 |

(continued)

| | | Example | | | | | | | | | |
|---|---|---|---|---|---|---|---|---|---|---|---|
| | | 1 | 2 | 3 | 4 | 5 | 6 | 7 | 8 | 9 | 10 |
| | (E*/T) ×100 | 2.72 | 2.72 | 2.72 | 2.72 | 2.72 | 3.18 | 3.18 | 3.18 | 2.48 | 4.10 |
| | e/(139.5-0.3Wt) | 1.01 | 1.01 | 1.01 | 1.01 | 1.14 | 1.01 | 1.12 | 1.64 | 1.12 | 1.02 |
| | e/(191.5-0.3Wt) | 0.59 | 0.59 | 0.59 | 0.59 | 0.67 | 0.57 | 0.63 | 0.92 | 0.63 | 0.52 |
| | e/(110.84-0.1667Wt) | 1.01 | 1.00 | 1.01 | 1.00 | 1.14 | 0.96 | 1.06 | 1.56 | 1.06 | 0.87 |
| Evaluation Results | Durability at high-speed running | 105 | 110 | 113 | 119 | 126 | 117 | 126 | 124 | 134 | 120 |

[Table 2]

| | | Example | | | Comparative example | | | | | | |
|---|---|---|---|---|---|---|---|---|---|---|---|
| | | 11 | 12 | 13 | 1 | 2 | 3 | 4 | 5 | 6 | 7 |
| Size | | 285/3 5R20 | 285/3 5R20 | 285/3 5R20 | 215/7 0R16 | 215/7 0R16 | 215/7 0R16 | 215/7 0R16 | 215/7 0R16 | 215/7 0R16 | 215/7 0R16 |
| Formu -la-tion | NR | 60 | 60 | 60 | 60 | 60 | 60 | 60 | 60 | 60 | 60 |
| | BR | 40 | 40 | 40 | 40 | 40 | 40 | 40 | 40 | 40 | 40 |
| | Carbon Black | 50 | 50 | 30 | 57 | 57 | 57 | 57 | 57 | 57 | 57 |
| | Oil | 10 | 10 | 5 | 5 | 5 | 5 | 5 | 5 | 5 | 5 |
| | Wax | 2.5 | 2.5 | 2.5 | 2.5 | 2.5 | 2.5 | 2.5 | 2.5 | 2.5 | 2.5 |
| | Anti-aging agent-1 | 2 | 2 | 2 | 2 | 2 | 2 | 2 | 2 | 2 | 2 |
| | Anti-aging agent-2 | 1 | 1 | 1 | 1 | 1 | 1 | 1 | 1 | 1 | 1 |
| | Zinc oxide | 3 | 3 | 3 | 3 | 3 | 3 | 3 | 3 | 3 | 3 |
| | Stearic acid | 1.5 | 1.5 | 1.5 | 1.5 | 1.5 | 1.5 | 1.5 | 1.5 | 1.5 | 1.5 |
| | Sulfur | 1.5 | 1.5 | 1.5 | 1.5 | 1.5 | 1.5 | 1.5 | 1.5 | 1.5 | 1.5 |
| | Vulcanization accelerator | 1 | 1 | 1 | 1 | 1 | 1 | 1 | 1 | 1 | 1 |
| Cord | Configuration | 1×1 | 1×1 | 1×1 | 1×2 | 1×2 | 1×2 | 1×1 | 1×1 | 1×1 | 1×1 |
| | Cord Outer Diameter (mm) | 0.3 | 0.3 | 0.3 | 0.59 | 0.59 | 0.59 | 0.59 | 0.3 | 0.3 | 0.3 |
| | Ends (cors/5cm) | 65 | 95 | 65 | 42 | 75 | 130 | 42 | 130 | 42 | 42 |
| Belt layer | Average distance D(mm) | 0.45 | 0.45 | 0.45 | 0.7 | 0.7 | 0.7 | 0.7 | 0.7 | 0.7 | 0.45 |
| | Angle (°) | 23 | 23 | 23 | 40 | 40 | 40 | 40 | 40 | 30 | 30 |
| Parameter | E*(Mpa) | 3.2 | 3.2 | 2.5 | 4.1 | 4.1 | 4.1 | 4.1 | 4.1 | 4.1 | 4.1 |
| | Wt(mm) | 287 | 285 | 285 | 216 | 217 | 215 | 216 | 217 | 216 | 217 |
| | 139.5-0.3Wt | 53.4 | 54.0 | 54.0 | 74.7 | 74.4 | 75.0 | 74.7 | 74.4 | 74.7 | 74.4 |
| | 191.5-0.3Wt | 105.4 | 106.0 | 106.0 | 126.7 | 126.4 | 127.0 | 126.7 | 126.4 | 126.7 | 126.4 |
| | 110.84-0.1667Wt | 63.0 | 63.3 | 63.3 | 74.8 | 74.7 | 75.0 | 74.8 | 74.7 | 74.8 | 74.7 |
| | T(mm) | 100.0 | 100.0 | 100.0 | 150.8 | 150.8 | 150.8 | 150.8 | 150.8 | 150.8 | 150.8 |

(continued)

| | | Example | | | Comparative example | | | | | | |
|---|---|---|---|---|---|---|---|---|---|---|---|
| | | 11 | 12 | 13 | 1 | 2 | 3 | 4 | 5 | 6 | 7 |
| | (E*/T) ×100 | 3.20 | 3.20 | 2.50 | 2.72 | 2.72 | 2.72 | 2.72 | 2.72 | 2.72 | 2.72 |
| | e/(139.5-0.3Wt) | 1.22 | 1.76 | 1.20 | 0.56 | 1.01 | 1.73 | 0.56 | 1.75 | 0.56 | 0.56 |
| | e/(191.5-0.3Wt) | 0.62 | 0.90 | 0.61 | 0.33 | 0.59 | 1.02 | 0.33 | 1.03 | 0.33 | 0.33 |
| | e/(110.84-0.1667Wt) | 1.03 | 1.50 | 1.03 | 0.56 | 1.00 | 1.73 | 0.56 | 1.74 | 0.56 | 0.56 |
| Evaluation Results | Durability at high speed running | 129 | 132 | 135 | 91 | 100 | 95 | 83 | 85 | 85 | 88 |

From the results shown in Tables 1 and 2, it can be seen that, when the above-mentioned (formula 1) and (formula 2) are satisfied in the belt layer using the monofilament cord as the reinforcing cord, a pneumatic tire in which the durability during high-speed running is excellent can be provided.

In addition, it can be seen that, when the number of ends exceeds 80 cords/5 cm, or when the side portion satisfies $(E^*/T) \times 100 \leqq 3.0$ (formula 4), a pneumatic tire in which the durability during high-speed running is further improved can be provided.

Although the present invention has been described above based on the embodiments, the present invention is not limited to the above embodiments. Various modifications can be made to the above embodiment within the scope of the appended claims.

## Claims

1. A pneumatic tire having a side portion and a belt layer, wherein

   the belt layer uses a monofilament cord as a reinforcing cord, and
   a tire cross-sectional width Wt refers to the width of the tire, obtained by excluding the patterns and letters on the sidewalls of the tire from the straight-line distance between the sidewalls, including all patterns and letters on the sidewalls of the tire,
   **characterized in that**
   the number e of arranged monofilament cords per 5 cm in the tire width direction (cords/5 cm) in the cross section of the belt layer in the tire radial direction, and the tire cross-sectional width Wt (mm) when the tire is installed on a standardized rim and the internal pressure is set to 250 kPa satisfy the following (formula 1) and (formula 2).

$$e/(139.5 - 0.3Wt) > 1.14 \qquad \text{(formula 1)}$$

$$e/(191.5 - 0.3Wt) < 0.63 \qquad \text{(formula 2)}$$

2. The pneumatic tire according to claim 1, wherein the tire cross-sectional width Wt is 125 mm or more and 300 mm or less.

3. The pneumatic tire according to claim 1 or 2, wherein the tire cross-sectional width Wt (mm) is 215 mm or more, and the following (formula 3) is satisfied.

$$e/(110.84 - 0.1667Wt) > 1 \qquad \text{(formula 3)}$$

4. The pneumatic tire according to any one of claims 1-3, wherein the monofilament cord has a cord outer diameter of 0.1 mm or more and 0.5 mm or less.

5. The pneumatic tire according to any one of claims 1-4, wherein the arrangement number e (cords/5 cm) of the monofilament cords per 5 cm in the tire width direction is more than 80 cords/5 cm.

6. The pneumatic tire according to any one of claims 1-5, wherein the complex elastic modulus E* (MPa) of the sidewall rubber composition in the side portion measured under the conditions of temperature of 70°C, initial strain of 5%, dynamic strain of ±1%, frequency of 10 Hz, and deformation mode: elongation, and the height T (mm) of the side portion satisfy the following (formula 4).

$$(E^*/T) \times 100 \leqq 3.0 \qquad \text{(formula 4)}$$

7. The pneumatic tire according to any one of claims 1-6, wherein the angle formed by the reinforcing cord of the belt layer and a straight line parallel to the tire circumferential direction is 10 ° or more and 35 ° or less.

8. The pneumatic tire according to any one of claims 1-7, wherein at least two belt layers are provided, and at least one set of belt layers adjacent in the tire radial direction is arranged at a distance of 0.5 mm or less.

9. The pneumatic tire according to any one of claims 1-8, wherein the tread portion has a circumferential groove extending continuously in the tire circumferential direction, and the ratio (L80 /L0) of the groove width L80 at 80% depth of the maximum depth of the circumferential groove to the groove width L0 of the circumferential groove on the contact surface of the tread portion is 0.3 or more and 0.7 or less.

10. The pneumatic tire according to any one of claims 1-9, wherein the tread portion has a plurality of circumferential grooves extending continuously in the tire circumferential direction, and the total cross-sectional area of the plurality of circumferential grooves is 10% or more and 30% or less of the cross-sectional area of the tread portion.

11. The pneumatic tire according to any one of claims 1-10, wherein the tread portion has a plurality of lateral grooves extending in the axial direction of the tire, and the total volume of the plurality of lateral grooves is 2.0% or more and 5.0% or less of the volume of the tread portion.

## Patentansprüche

1. Pneumatischer Reifen, der einen Seitenabschnitt und eine Gurtlage hat, wobei

   die Gurtlage einen Monofilamentcord als einen Verstärkungscord verwendet, und
   eine Reifenquerschnittsbreite Wt sich auf die Breite des Reifens bezieht, die durch Ausschließen der Muster und Buchstaben an den Seitenwänden des Reifens von der geradlinigen Entfernung zwischen den Seitenwänden erhalten wird, die alle Muster und Buchstaben an den Seitenwänden des Reifens umfasst,
   **dadurch gekennzeichnet, dass**
   die Anzahl e angeordneter Monofilamentcorde pro 5 cm in der Reifenbreitenrichtung (Corde/5 cm) in dem Querschnitt der Gurtlage in der Reifenradialrichtung und die Reifenquerschnittsbreite Wt (mm), wenn der Reifen an einer standardisierten Felge installiert ist und der Innendruck auf 250 kPa eingestellt ist, die folgenden (Formel 1) und (Formel 2) erfüllen.

$$e / (139{,}5 - 0{,}3\ Wt) > 1{,}14 \qquad \text{(Formel 1)}$$

$$e / (191{,}5 - 0{,}3\ Wt) < 0{,}63 \qquad \text{(Formel 2)}$$

2. Pneumatischer Reifen gemäß Anspruch 1, wobei die Reifenquerschnittsbreite Wt 125 mm oder größer und 300 mm oder kleiner ist.

3. Pneumatischer Reifen gemäß Anspruch 1 oder 2, wobei die Reifenquerschnittsbreite Wt (mm) 215 mm oder größer ist und die folgende (Formel 3) erfüllt ist.

$$e / (110{,}84 - 0{,}1667\ Wt) > 1 \qquad \text{(Formel 3)}$$

4. Pneumatischer Reifen gemäß einem der Ansprüche 1 bis 3, wobei der Monofilamentcord einen Cordaußendurchmesser von 0,1 mm oder größer und 0,5 mm oder kleiner hat.

5. Pneumatischer Reifen gemäß einem der Ansprüche 1 bis 4, wobei die Anordnungsanzahl e (Corde/5 cm) der Monofilamentcorde pro 5 cm in der Reifenbreitenrichtung größer als 80 Corde/5 cm ist.

6. Pneumatischer Reifen gemäß einem der Ansprüche 1 bis 5, wobei der komplexe Elastizitätsmodul E* (MPa) der Seitenwandgummimischung in dem Seitenabschnitt, gemessen unter den Bedingungen einer Temperatur von 70 °C, einer Ausgangsdehnung von 5 %, einer dynamischen Dehnung von ± 1 %, einer Frequenz von 10 Hz und eines Verformungsmodus: Verlängerung, und die Höhe T (mm) des Seitenabschnitts die folgende (Formel 4) erfüllen.

$$(E^*/T) \times 100 \leq 3{,}0 \qquad \text{(Formel 4)}$$

7. Pneumatischer Reifen gemäß einem der Ansprüche 1 bis 6, wobei der Winkel, der durch den Verstärkungscord der Gurtlage und eine gerade Linie ausgebildet ist, die zu der Reifenumfangsrichtung parallel ist, 10° oder größer und 35°

oder kleiner ist.

8. Pneumatischer Reifen gemäß einem der Ansprüche 1 bis 7, wobei mindestens zwei Gurtlagen vorgesehen sind und mindestens ein Satz Gurtlagen, die in der Reifenradialrichtung benachbart sind, bei einer Entfernung von 0,5 mm oder kleiner angeordnet ist.

9. Pneumatischer Reifen gemäß einem der Ansprüche 1 bis 8, wobei der Profilabschnitt eine Umfangsnut hat, die sich durchgängig in der Reifenumfangsrichtung erstreckt, und das Verhältnis (L80/L0) der Nutbreite L80 bei einer Tiefe von 80 % der Maximaltiefe der Umfangsnut zu der Nutbreite L0 der Umfangsnut an der Kontaktfläche des Profilabschnitts 0,3 oder größer und 0,7 oder kleiner ist.

10. Pneumatischer Reifen gemäß einem der Ansprüche 1 bis 9, wobei der Profilabschnitt eine Vielzahl Umfangsnuten hat, die sich durchgängig in der Reifenumfangsrichtung erstrecken, und der Gesamtquerschnittsflächeninhalt der Vielzahl Umfangsnuten 10 % oder größer und 30 % oder kleiner des Querschnittsflächeninhalts des Profilabschnitts ist.

11. Pneumatischer Reifen gemäß einem der Ansprüche 1 bis 10, wobei der Profilabschnitt eine Vielzahl Lateralnuten hat, die sich in der Axialrichtung des Reifens erstrecken, und das Gesamtvolumen der Vielzahl Lateralnuten 2,0 % oder größer und 5,0 % oder kleiner des Volumens des Profilabschnitts ist.

**Revendications**

1. Pneumatique comportant une partie latérale et une couche de ceinture, dans lequel

   la couche de ceinture utilise un câble monofilament comme câble de renforcement, et
   une largeur de section transversale du pneumatique Wt se réfère à la largeur du pneumatique, obtenue en excluant les motifs et les lettres sur les flancs du pneumatique de la distance en ligne droite entre les flancs, y compris tous les motifs et toutes les lettres sur les flancs du pneumatique,
   **caractérisé en ce que**
   le nombre e de câbles monofilamentaires disposées par 5 cm dans le sens de la largeur du pneu (câbles/5 cm) dans la section transversale de la couche de ceinture dans le sens radial du pneu, et la largeur de la section transversale du pneu Wt (mm) lorsque le pneu est installé sur une jante normalisée et que la pression interne est réglée à 250 kPa satisfont aux formules suivantes (formule 1) et (formule 2).

$$e / (139{,}5 - 0{,}3\ Wt) > 1{,}14 \qquad \text{(formule 1)}$$

$$e / (191{,}5 - 0{,}3\ Wt) < 0{,}63 \qquad \text{(formule 2)}$$

2. Pneumatique selon la revendication 1, dans lequel la largeur de section transversale Wt du pneumatique est de 125 mm ou plus et de 300 mm ou moins.

3. Pneumatique selon la revendication 1 ou 2, dans lequel la largeur de section transversale Wt (mm) du pneumatique est de 215 mm ou plus, et la formule suivante (formule 3) est satisfaite.

$$e / (110{,}84 - 0{,}1667\ Wt) > 1 \qquad \text{(formule 3)}$$

4. Pneumatique selon l'une quelconque des revendications 1 à 3, dans lequel le câble monofilament a un diamètre extérieur de câble de 0,1 mm ou plus et de 0,5 mm ou moins.

5. Pneumatique selon l'une quelconque des revendications 1 à 4, dans lequel le nombre d'arrangement e (câbles/5 cm) des câbles monofilaments par 5 cm dans le sens de la largeur du pneumatique est supérieur à 80 câbles/5 cm.

6. Pneumatique selon l'une quelconque des revendications 1 à 5, dans lequel le module d'élasticité complexe E* (MPa) de la composition de caoutchouc de flanc dans la partie latérale, mesuré dans les conditions de température de 70 °C, de déformation initiale de 5 %, de déformation dynamique de ± 1 %, de fréquence de 10 Hz et de mode de

déformation : allongement, et la hauteur T (mm) de la partie latérale satisfont à la formule suivante (formule 4).

$$(E^*/T) \times 100 \leqq 3{,}0 \qquad \text{(formule 4)}$$

**7.** Pneumatique selon l'une quelconque des revendications 1 à 6, dans lequel l'angle formé par le câble de renforcement de la couche de ceinture et une ligne droite parallèle à la direction circonférentielle du pneumatique est de 10° ou plus et de 35° ou moins.

**8.** Pneumatique selon l'une quelconque des revendications 1 à 7, dans lequel au moins deux couches de ceinture sont prévues, et au moins un ensemble de couches de ceinture adjacentes dans la direction radiale du pneumatique est disposé à une distance de 0,5 mm ou moins.

**9.** Pneumatique selon l'une quelconque des revendications 1 à 8, dans lequel la partie de bande de roulement comporte une rainure circonférentielle s'étendant de manière continue dans la direction circonférentielle du pneumatique, et le rapport (L80/L0) de la largeur de rainure L80 à 80 % de la profondeur maximale de la rainure circonférentielle sur la largeur de rainure L0 de la rainure circonférentielle sur la surface de contact de la partie de bande de roulement est de 0, 3 ou plus et de 0,7 ou moins.

**10.** Pneumatique selon l'une quelconque des revendications 1 à 9, dans lequel la partie de bande de roulement comporte une pluralité de rainures circonférentielles s'étendant de manière continue dans la direction circonférentielle du pneumatique, et la surface totale en section transversale de la pluralité de rainures circonférentielles est de 10 % ou plus et de 30 % ou moins de la surface en section transversale de la partie de bande de roulement.

**11.** Pneumatique selon l'une quelconque des revendications 1 à 10, dans lequel la partie de bande de roulement comporte une pluralité de rainures latérales s'étendant dans la direction axiale du pneumatique, et le volume total de la pluralité de rainures latérales est de 2,0 % ou plus et de 5,0 % ou moins du volume de la partie de bande de roulement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018178034 A
- JP 2019089911 A
- WO 2018186367 A1
- JP 2019206643 A
- EP 1209009 A2
- JP 2016203685 A
- JP 2015080972 A
- JP 2010089727 A
- JP 2015511197 A
- JP 2001334809 A
- JP H06255313 A
- JP 2018535879 A
- US 4414370 A
- JP S596207 A
- JP H558005 B
- JP H1313522 A
- US 5010166 A


### Non-patent literature cited in the description


- *Toagosei Annual Report TREND2000*, vol. 3, 42-45